# EUROPEAN PATENT APPLICATION

(11) **EP 0 618 573 A1**
(43) Date of publication of application: **05.10.1994**
(21) Application number: 94105163.3
(22) Date of filing: 31.03.1994
(51) Int. Cl.: G11B 15/61

(54) **Video cassette recorder with an improved head drum**

(30) Priority: 31.03.1993 KR 9305405
(71) Applicant: DAEWOO ELECTRONICS CO., LTD, Jung-Gu, Seoul 100-095 (KR)
(72) Inventor: Choi, Kye-Chul, Chamwon Hansin, Seocho-Ku, Seoul (KR); Kim, Keum-Mo, Nowon-ku, Seoul (KR); Eun, Kwang-Yong, Songpa-Ku, Seoul (KR); Lee, Kwang-Ryeol, Seocho-ku, Seoul (KR)
(74) Representative: von Samson-Himmelstjerna, Friedrich R., Dipl.-Phys.

(57) **Abstract**

A head drum for use in a video cassette recorder is coated with a protective layer comprising either titanium nitride or diamond-like carbon. The protective layer of titanium nitride is obtained using a hollow-cathode-deposition process and has a thickness ranging from 0.5µm to 5.0µm. The protective layer of diamond-like carbon is obtained using a plasma enhanced chemical vapor deposition process and has a thickness ranging from 0.3µm to 5.0µm.

## Description

### Field of the Invention

The present invention relates to a video cassette recorder("VCR"); and, more particularly, to an improved head drum for use in a VCR having a protective layer comprising either titanium nitride or diamond-like carbon on the surface thereof.

### Background of the Invention

As is well known, one of the primary roles of a head drum in a VCR is to provide stability to the magnetic tape travelling along a defined path within the VCR without damaging or adversely affecting the tape. In order to fulfill this role, the surface of the drum which is in contact with the moving tape is designed in such a way that it has macroscopic smoothness and yet, microscopically, is provided on its surface with a plurality of undulations running along the direction normal to the rotational axis thereof in order to reduce the friction therebetween. Inasmuch as another design requirement thereof lies in the protection of the information recorded on the tape, the head drum is usually made of a non-magnetic material.

The head drum has been hitherto made primarily of an aluminum alloy such as Al-Si, Al-Cu or a variation thereof. Above the surface of the head drum made of such an aluminum alloy, there is formed a layer of aluminum oxide (Al₂O₃) in the thickness of a few nm, said layer being in physical contact and interacting with the lubricating and magnetic layer of the tape.

Since the layer of Al₂O₃ formed on the head drum surface is of an insufficient thickness, i.e., too thin, the mechanical properties of the Al₂O₃ layer will be largely influenced by the mechanical properties of the aluminum alloy constituting the head drum. In other words, the effect of the Al₂O₃ layer can be virtually ignored and the overall mechanical properties of the head drum surface can simply be regarded as those of the surface made of the aluminum alloy alone. During a normal operation of the VCR, since such magnetic powders in the magnetic layer as γ-Fe₂O₃, Fe and the like are harder than the aluminum alloy as shown in Table 2 hereof, the magnetic powders will, in addition to scratching and wearing down the head drum surface, become embedded on the head drum surface. Those embedded magnetic powders, in addition to scratching the tape surface, when accumulated in enough quantities, will form a layer on the surface of the head drum, which will in turn affect magnetically the information stored on the tape itself, thereby harming the quality of the picture.

Furthermore, since the head drum is designed by taking into consideration such factors as aerodynamic and adhesion properties between the head drum surface and the video tape in order to provide stability to the traveling video tape, even a slight wearing down of the head drum surface, for example in the neighborhood of 0.3µm, may hamper the head drum from fulfilling the above-mentioned primary objective.

Furthermore wearing down of the tips of the undulations provided on the drum surface will increase the contact area between the tape and the head drum, which may further aggravate the wearing down process. If this process is allowed to continue, it will affect the performance of the VCR, causing sudden shaking of picture or stoppage thereof.

### Summary of the Invention

It is, therefore, a primary object of the present invention to provide an improved head drum for use in a VCR having a non-magnetic protective layer of a sufficient thickness and hardness coated on the surface of the head drum.

It is another object of the present invention to provide a protective layer on the head drum surface which does not damage or adversely affect the integrity of the video tape and/or information recorded thereon.

It is a further object of the present invention to provide an improved head drum which is highly durable against a prolonged use and/or sudden change in the environment.

In accordance with one embodiment of the present invention, there is provided a head drum for use in a VCR having a protective layer coated thereon, characterized in that the protective layer comprises titanium nitride in a thickness ranging from 0.5µm to 5.0µm, and wherein said coating of the protective layer is conducted by using a hollow cathode-deposition ion plating method.

In accordance with another embodiment of the present invention, there is provided a head drum for use in a VCR having a protective layer coated thereon, characterized in that the protective layer comprises diamond-like carbon in a thickness ranging from 0.3µm to 5.0µm, and wherein said coating of the protective layer is conducted by using a plasma enhanced chemical vapor deposition process.

### Brief Description of the Drawings

The above and other objects, and features of the present invention will become apparent from the following description of preferred embodiments given in conjunction with the accompanying drawings, wherein:
Fig. 1 shows the change in the compressive stress of diamond-like carbon layer as a function of the layer thickness;
Fig. 2 depicts the effects of the accelerated mode test and the normal operation test on the undulations of the head drum surface without a protective layer of the present invention;
Fig. 3 illustrates the effects of the accelerated mode test and the normal operation test on the undulations of the head drum surface with a protective layer made of TiN; and
Fig. 4 represents the effects of the accelerated mode test and the humidity test conducted on the undulations of the head drum surface with a protective layer made of diamond-like carbon.

### Detailed Description of the Preferred Embodiments

In accordance with the present invention, the surface of the head drum in a VCR is provided with a protective layer comprising either titanium nitride (TiN) or diamond-like carbon.

As used herein, by diamond-like carbon(DLC), it is meant a three dimensional arrangement of carbon atoms having a short range order which is similar to the one observed in the diamond structure, wherein each carbon atom is surrounded by four other carbon atoms, but unlike the diamond structure, lacks a long range order, i.e., no unit of the structure is repeated at regular intervals; and possessing the dielectric, chemical, mechanical and optical properties that are shown in Table 1.

**Table 1**

| Properties of diamond and diamond-like carbon | | |
|---|---|---|
| | Diamond | DLC |
| Crystal Structure | Cubic(sp³) | Amorphous Combination of sp³, sp², sp¹ |
| Density(g/cm³) | 3.51 | 1.8-2.0 |
| Hardness (Vickers, kg/mm²) | 7,000-10,000 | 900-3,000 |
| Friction coefficient | 0.03-0.07 | 0.005-0.05 |
| Refractive index | 2.42 | 1.8-2.2 |
| Transparency | UV-VIS-IR | VIS IR |
| Optical Gap(eV) | 5.5 | 2.0-3.0 |
| Resistivity(Ωcm) | >10¹⁶ | 10¹⁰-10¹³ |
| Dielectric constant | 5.7 | 4-9 |

As can be seen from Tables 2 and 3, the above mentioned protective layer materials, TiN and DLC, are harder than aluminum alloys, in addition to having good separability when in contact with different materials and having a low friction coefficient with respect to the video tape, with DLC having the lowest friction coefficient among the four possible layer materials.

**Table 2**

| Micro-Vickers hardness of various materials (measurement depth is less than 0.5µm). | |
|---|---|
| Material | Micro-Vickers hardness(kg/mm²) |
| Al | 16 |
| Al-Cu | ∼ 100 |
| Al-Si | ∼ 55 |
| Ti | 1000-1300 |
| TiN | 1500-2000 |
| TiC | 2400-2700 |
| γ-Fe₂O₃ | 560 |
| DLC | 2800 |
| Al₂O₃ | 1600-1800 |

**Table 3**

| Friction coefficient of various materials | |
|---|---|
| Material | Friction coefficient* |
| Al₂O₃ | 0.35 |
| Ti | 0.29 |
| TiN | 0.30 |
| DLC | 0.25 |

| | |
|---|---|
| * The friction coefficient for each material was calculated using the change in tape tension before and after rubbing the tape 80 times on the surface layered with the material. | |

The protective layer made of DLC was formed on the surface of the aluminum head drum using the technique of plasma-enhanced chemical vapor deposition (PECVD); and the protective layer made of TiN was formed by using a hollow-cathode-deposition(HCD) ion plating method, was carried out with a HCD electron gun operating under a vacuum. When too thin, the mechanical properties of the protective layer will be influenced by the mechanical properties of the head drum which is essentially made of an aluminum alloy; and, in such a case, as seen in the case of Al₂O₃ layer, it would not be able to adequately protect the head drum surface. If it were too thick, the compressive stress inside the layer would become too great for it to handle, which, when faced with a variation in, e.g., temperature, may result in a surface cracking.

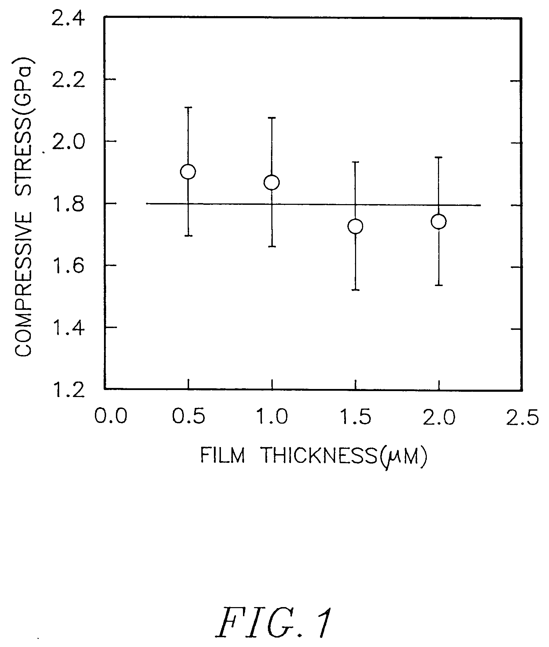

The optimum thickness of the TiN protective layer has been found to lie within a range of 0.5^{∼}5.0µm; and, in the case of the DLC protective layer, the optimum thickness has been determined to lie within a range of 0.3^{∼}5.0µm. The optimum thickness is represented by a region in which the compressive stress remains almost constant with respect to the layer thickness. Fig. 1 shows the variation of the compressive stress of the protective layer made of DLC as a function of the layer thickness.

In order to determine the reliability of the head drum having a protective layer comprising either TiN or DLC, the following tests were carried out:
(1) conducting an accelerated mode test consisting of consecutively operating a VCR in the modes of Fast Forward, Rewind, Fast Forward while viewing, and Rewind while viewing, all within a 30 second period wherein the Fast Forward mode lasts for 7 seconds, the Rewind mode, for 7 seconds, the Fast Forward while viewing, for 8 seconds, and the Rewind while viewing, for 8 seconds;
(2) conducting a normal operating test, i.e., operating the VCR in the Play mode; and
(3) conducting a humidity test by operating the VCR in the Play mode at 30°C and 70% humidity.

The results obtained were compared with those obtained from similar tests carried out with a VCR having a conventional head drum.

The effects of the accelerated mode test and the normal operation test on the undulations provided on the head drum surface were observed using a roughness tester from KOSAKA (Surfcorder SE-300).

### Example 1

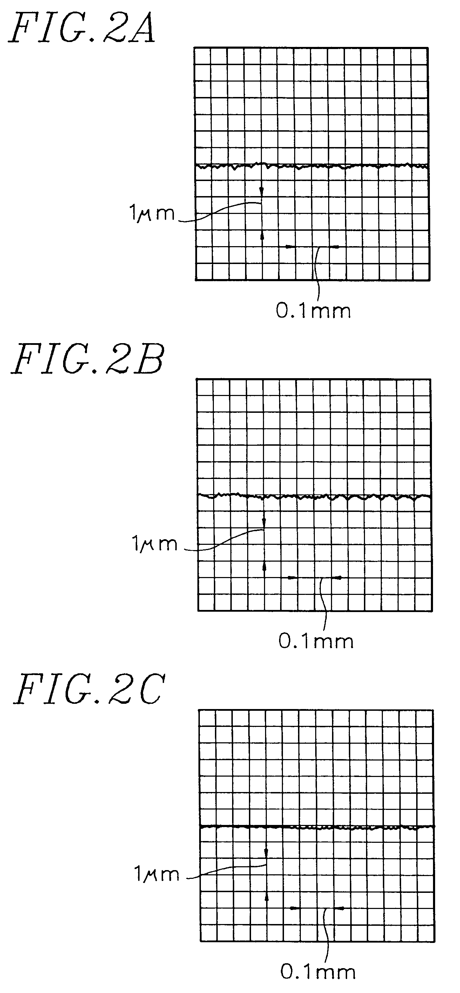

The reliability of a conventional head drum was evaluated in accordance with the above-mentioned reliability procedures, and the results are shown in Fig. 2. Specifically, in Fig. 2A, there is shown the roughness test data of the conventional head drum surface prior to the reliability tests; in Fig. 2B, the roughness data after 1,000 hours of the accelerated mode test; and in Fig. 2C, the same after 1,000 hours of the normal operating test.

### Example 2

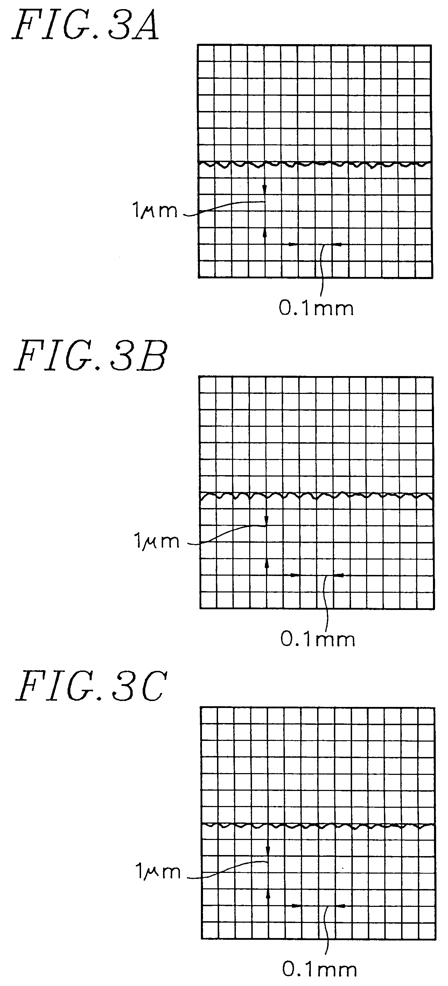

A protective layer made of TiN with a thickness of 0.8µm was formed on the surface of an aluminum head drum using the HCD ion plating method. The reliability of the head drum was evaluated in accordance with the above-mentioned reliability test procedures, and the results are shown in Fig. 3. Specifically, in Fig. 3A, there is shown the roughness data of the head drum surface prior to the reliability tests; in Fig. 3B, the roughness data after 1,000 hours of the accelerated mode test; and, in Fig. 3C, the same after 1,000 hours of the normal operating test.

### Example 3

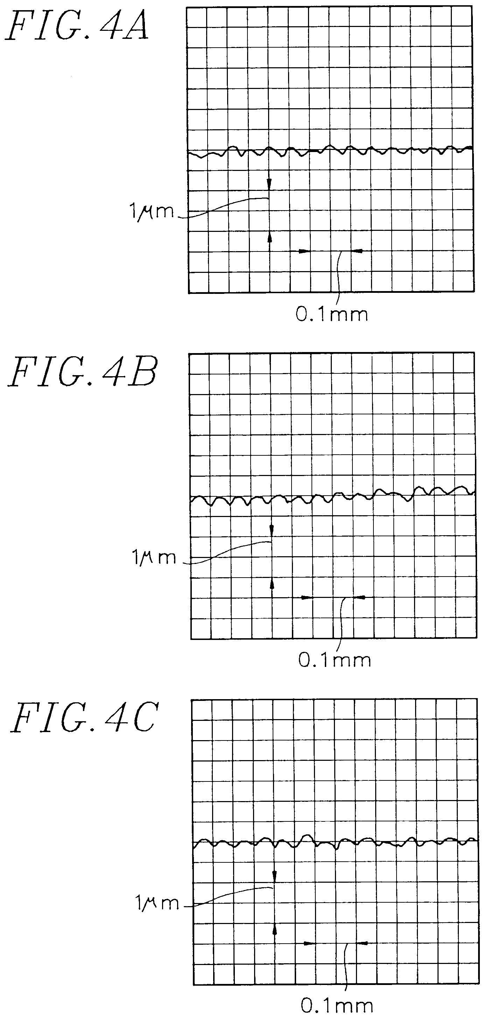

A protective layer made of DLC with a thickness of 2.0µm was formed on the surface of an aluminum head drum using the PECVD method. The reliability of the head drum was evaluated in accordance with the above procedures, and the results are shown in Fig. 4. Specifically, in Fig. 4A, there is shown the roughness data of the head drum surface prior to the reliability tests; in Fig. 4B, the roughness data after 1,000 hours of the accelerated mode test; and, in Fig. 4C, the same after 1,000 hours of the humidity test.

According to the results obtained from the conventional head drum, in the case of the accelerated mode test, the undulations provided on the head drum surface were almost worn out after 200 hours; and after 1,000 hours of continuous testing, they were completely gone and the drum surface was in the process of being lapped as shown in Fig. 2B. In the case of the normal operating test, the undulations all disappeared from the head drum surface after 1,000 hours of continuous testing as shown in Fig. 2C. According to the results obtained from the humidity test, when observed after 1,000 hours of testing, the surface was covered with a binder-like substance (not shown), resulting in the disappearance of the undulations from the head drum surface. The binder-like substance, which was determined to have originated from the video tape, resulted from the increase in friction between the video tape and the head drum surface under the high humidity condition. It was also observed that there was a sudden stoppage, resulting from an increase in tape tension due to the increase in friction between the tape and the drum surface under the high humidity condition.

According to the results obtained from the head drum with the TiN protective layer, even after 1,000 hours of the accelerated mode test, the undulations, unlike in the case of the conventional head drum, continued to maintain their initial form as shown in Fig. 3B. Similar results were obtained from the humidity test(not shown) and the normal operation test(see Fig. 3C).

According to the results obtained from the accelerated mode test and the humidity test conducted on the head drum with the DLC protective layer, even after 1,000 hours of testing, the undulations continued to maintain their initial form(see Figs. 4B and 4C).

While the present invention has been shown and described with reference to the particular embodiments, it will be apparent to those skilled in the art that many changes and modifications may be made without departing from the spirit and scope of the invention as defined in the appended claims.

## Claims

1. A video cassette recorder having a head drum, characterized in that said head drum is coated with a protective layer comprising titanium nitride.

2. The video cassette recorder of claim 1, wherein said protective layer is obtained by using a hollow-cathode-deposition ion plating method.

3. The video cassette recorder of claim 2, wherein said protective layer has a thickness ranging from 0.5µm to 5.0µm.

4. A video cassette recorder having a head drum, characterized in that said head drum is coated with a protective layer comprising diamond-like carbon.

5. The video cassette recorder of claim 4, wherein said protective layer is obtained by using a plasma-enhanced chemical vapor deposition process.

6. The video cassette recorder of claim 5, wherein said protective layer has a thickness ranging from 0.3µm to 5.0µm.
